# EUROPÄISCHE PATENTANMELDUNG

(11) **EP 3 944 108 A1**
(43) Veröffentlichungstag der Anmeldung: **26.01.2022**
(21) Anmeldenummer: 20186873.4
(22) Anmeldetag: 21.07.2020
(51) Int. Cl.: G06F 21/33, H04L 9/32, G05B 19/406

(54) **REVOKATION VON ZERTIFIKATEN IN EINER TECHNISCHEN ANLAGE**

(71) Anmelder: Siemens Aktiengesellschaft, 80333 München (DE)
(72) Erfinder: Lutz, Benjamin, 76327 Pfinztal (DE); Palmin, Anna, 76187 Karlsruhe (DE)

(57) **Zusammenfassung**

Vorgeschlagen wird ein Leitsystem (1) für eine technische Anlage, insbesondere eine Fertigungs- oder Prozessanlage, das wenigstens einen Engineering Station Server (2), wenigstens eine Zertifizierungsinstanz (7), und wenigstens eine erste zu automatisierende Anlagenkomponente (8) und eine zweite zu automatisierende Anlagenkomponente (9) umfasst. Das Leitsystem (1) ist dadurch gekennzeichnet, dass wenigstens auf der ersten Anlagenkomponente (8) und der zweiten Anlagenkomponente (9) ein Revokationsdienst (15, 16) implementiert ist, und dass der Engineering Station Server (2) dazu ausgebildet ist, bei einem Wegfall der ersten Anlagenkomponente (8) unmittelbar die Automatisierungskonfiguration (13) zu aktualisieren und unmittelbar nach dieser Aktualisierung eine diesbezügliche Information an wenigstens den Revokationsdienst (15, 16) der ersten Anlagenkomponente (8) oder den Revokationsdienst (15, 16) der zweiten Anlagenkomponente (9) zu übermitteln, und dass der Revokationsdienst (15, 16) der ersten Anlagenkomponente (8) und der Revokationsdienst (15, 16) der zweiten Anlagenkomponente (9) dazu ausgebildet sind, anhand der aktualisierten Automatisierungskonfiguration (13) eine Notwendigkeit einer Revokation eines oder mehrerer Zertifikate zu ermitteln und daraufhin eine entsprechende Revokationsnachricht an wenigstens den Revokationsdienst (15, 16) der jeweils anderen Anlagenkomponente (8, 9) und an die Zertifizierungsinstanz (7) zu übermitteln, um eine Revokation der von der ersten Anlagenkomponente (8) und/oder der zweiten Anlagenkomponente (9) verwendeten Zertifikate durch die Zertifizierungsinstanz (7) zu initiieren, und um wenigstens die jeweils andere Anlagenkomponente (8, 9) über die vorzunehmende Revokation der Zertifikate zu benachrichtigen.

## Beschreibung

Die Erfindung betrifft ein Leitsystem einer technischen Anlage, insbesondere einer Fertigungs- oder Prozessanlage, mit den Oberbegriffsmerkmalen des Anspruchs 1. Außerdem betrifft die Erfindung eine Anlagenkomponente und eine Verwendung eines Leitsystems.

Im Umfeld der Automatisierung einer technischen Anlage wie beispielsweise einer Prozessanlage werden zunehmend diverse Protokolle und Mechanismen für eine sichere Kommunikation zwischen den einzelnen Komponenten der technischen Anlage wie Automatisierungsgeräten, Clients oder Servern eingesetzt. Die meisten dieser sicheren Protokolle und Mechanismen erfordern die Verwendung sogenannter digitaler Zertifikate.

Bei einigen Szenarien, die sich in einer technischen Anlage ereignen können, ist eine Revokation eines Zertifikats bzw. gleichzeitig mehrerer Zertifikate notwendig. Eine solche Revokation eines von einer Zertifizierungsinstanz (engl. Issuing Certification Authority, kurz: CA) für eine Anlagenkomponente ausgestellten Zertifikats führt immer dazu, dass dieses Zertifikat von der zuständigen Zertifizierungsinstanz auf eine sogenannte Sperrliste (engl. Certificate Revocation List, kurz: CRL), die alle nicht mehr gültigen Zertifikate enthält, gesetzt wird.

Die aktualisierte bzw. neu ausgestellte Sperrliste wird von der zugehörigen bzw. zuständigen Zertifizierungsinstanz unter Verwendung ihres privaten Schlüssels (engl. Private Key) signiert und gilt somit als vertrauenswürdig. In der Regel werden dabei die folgenden Zertifikatstypen verwendet:
- Operative Zertifikate (engl. Operating Certificates, kurz: OC), die für die Absicherung der Kommunikation (z.B. der OPC UA- oder TLS-Kommunikation) einer Komponente der technischen Anlage mit ihren Kommunikationspartnern in der technischen Anlage eingesetzt werden;
- Herstellerzertifikate (engl. Manufacturer Device Certificates, kurz: MDC), welche während der Herstellung einer Komponente der technischen Anlage in einem Werk des Herstellers auf der Komponente implementiert werden und der initialen Provisionierung (Inbetriebnahme) der Komponente dienen.

Es kann erforderlich sein, dass die Revokation von Zertifikaten möglichst umgehend bzw. sofort erfolgen muss. Ein Beispiel hierfür ist ein defektes und nicht mehr reparierbares Gerät, das von dem Netzwerk einer Prozessanlage getrennt werden soll. Hierbei ist es aus Security-Gründen sinnvoll, sowohl die verwendeten operativen Zertifikate als auch das Herstellerzertifikat des Gerätes sofort zu revozieren, d.h. auf die entsprechenden Sperrlisten zu setzen und somit ungültig zu machen. Hierbei ist zu beachten, dass sich die Sperrliste für ein von dem Gerät genutztes operatives Zertifikat in der Regel von einer Sperrliste für das Herstellerzertifikat des Gerätes unterscheidet, da diese Zertifikate und somit die entsprechenden Sperrlisten von unterschiedlichen Zertifizierungsinstanzen ausgestellt werden.

Durch eine umgehende Revokation der operativen Zertifikate und des Herstellerzertifikats wird es ermöglicht, dass das Gerät einerseits nicht mehr innerhalb der Prozessanlage unter Verwendung seiner operativen Zertifikate kommunizieren kann und andererseits auch außerhalb der Prozessanlage unter Verwendung seines Herstellerzertifikats nicht mehr provisioniert werden kann.

Wird ein Gerät, das projektspezifische, d.h. von einer projektspezifischen Zertifizierungsinstanz ausgestellte, operativen Zertifikate nutzt, aus einem Projekt entfernt und in einem anderen Projekt eingesetzt, ist es aus Security-Gründen erforderlich, dass seine "alten", für das neue Projekt nicht mehr benötigten, projektspezifischen operativen Zertifikate möglichst sofort revoziert werden. Dadurch kann ausgeschlossen werden, dass die "alten" operativen Zertifikate in einem nicht mehr zulässigen Kontext des "alten" Projektes eingesetzt werden. Somit kann den Gefährdungen des Normalbetriebs und der Anlagenverfügbarkeit, die durch einen Missbrauch der Operativen Zertifikate verursacht werden könnten, vorgebeugt werden.

In einer technischen Anlage, die aus Security-Sicht als heterogen gilt, weil sie Anlagenkomponenten beinhaltet, die möglicherweise unterschiedliche Zertifikatsmanagementprotokolle und -mechanismen - z.B. OPC UA, CMP (Certificate Management Protocol) nach RFC 4210, CMC (Certificate Management over CMS) nach RFC 5272, MS-WCCE (Windows Client Certificate Enrollment Protocol) - unterstützen, gibt es in der Regel mehrere verschiedene protokoll- bzw. komponentenspezifische Wege, die Revokation eines Zertifikats zu realisieren.

Der Revokationsvorgang kann beispielsweise bei der Verwendung von CMP durch die direkte Übermittlung eines von einer Anlagenkomponente generierten Revokationsantrags (engl. Revocation Request) an eine Registrierungsinstanz (engl. Registration Authority, kurz: RA), die den Antrag anschließend an die entsprechende CMP-fähige Zertifizierungsinstanz weiterleitet, erfolgen. Ferner kann der Revokationsantrag stellvertretend für eine Anlagenkomponente (vollautomatisiert) von der Registrierungsinstanz generiert und an eine Zertifizierungsinstanz (z.B. CMP-fähige CA oder Microsoft CA) übermittelt werden. Dabei kann dieser Vorgang von der Registrierungsinstanz selbst oder vom zuständigen Benutzer angestoßen werden. Alternativ ist es möglich (vorausgesetzt, dass die entsprechenden Berechtigungen vorliegen), die Revokation eines Zertifikats direkt in der Zertifizierungsinstanz (z.B. über deren Web-Frontend) vorzunehmen.

Im Zusammenhang mit der Revokation von Zertifikaten von einzelnen Komponenten einer technischen Anlage können die im Folgenden beschriebenen Probleme auftreten.

Ein Problem besteht darin, dass die Revokation der Zertifikate sich als nicht zuverlässig erweisen kann, da sie nicht adhoc ausgeführt werden kann. Falls die Revokation eines Zertifikats oder mehrerer Zertifikate aus den o.g. Gründen umgehend erfolgen soll, stellt es sich häufig heraus, dass der in der betroffenen Anlagenkomponente umgesetzte Mechanismus zum Anstoßen der Revokation und der damit verbundene Revokationsweg gerade nicht (zuverlässig) funktionieren. Beispielsweise kann eine umgehende Übermittlung eines von der Anlagenkomponenten generierten Revokationsantrages an die zuständige Zertifizierungsinstanz über die Registrierungsinstanz nicht immer möglich sein, weil eine dieser Instanzen ggf. offline und daher nicht erreichbar ist.

Der zuvor erläuterte Aspekt wird ggf. dadurch verschärft, dass in bestimmten Szenarien mehrere (in einer heterogenen Anlage vorhandene) Anlagenkomponenten bzw. deren Stellvertreter (z.B. die zuständigen lokalen Registrierungsstellen) versuchen, die Revokation ihrer Zertifikate gleichzeitig zu realisieren.

Ferner sind keine Mechanismen zur Revokation von Zertifikaten bekannt, die von einer externen Zertifizierungsstelle genutzt werden, die zwar als vertrauenswürdig gilt (was bedeutet, dass ihr CA-Zertifikat sowie die gesamte Vertrauenskette in der Anlage vorliegen), jedoch sich nicht in der Anlage befindet und nicht automatisch erreichbar ist. Dies ist beispielsweise der Fall, wenn einige Anlagenkomponenten von einem vertrauenswürdigen Integrator installiert werden und nach ihrer Inbetriebnahme in der Anlage weiterhin die vom Integrator aufgespielten Zertifikate z.B. für OPC UA oder TLS, nutzen. Manche Zertifikate werden auch bei vertrauenswürdig geltenden externen Dienstleistern über spezielle Workflows erworben.

Wird die Revokation der Zertifikate beispielsweise bei einem zu entsorgenden, defekten Gerät nicht ordnungsgemäß durchgeführt, stellt ein solches Gerät ein sehr hohes Sicherheitsrisiko dar, weil nicht ausgeschlossen werden kann, dass das Gerät versehentlich oder anderwärtig eingesetzt wird.

Ein weiteres Problem besteht darin, dass beim Entfernen einer Komponente der technischen Anlage die im Rahmen der obsolet gewordenen Kommunikationsbeziehungen verwendeten Zertifikate von ehemaligen Kommunikationspartnern der Komponente in der Regel nicht revoziert werden.

Häufig erweist sich das ersatzlose Entfernen von Anlagenkomponenten als sinnvoll. In diesem Fall wird eine entfernte Komponente nicht durch ein identisches Ersatzgerät ersetzt, so dass ihre Kommunikationsbeziehungen obsolet werden. Wie oben erläutert, wird versucht, die von der Komponente selbst verwendeten operativen Zertifikate zu revozieren. Diese operativen Zertifikate wurden jedoch für die sichere Kommunikation mit anderen Anlagenkomponenten eingesetzt, die ebenfalls einschlägige operative Zertifikate für die Kommunikation mit der entfernten Komponente (z.B. unter Verwendung von OPC UA oder TLS) benutzt haben. Diese Zertifikate haben zwar keine Bedeutung mehr, werden jedoch in der Regel nicht revoziert. Sie bleiben vielmehr unbenutzt auf den Kommunikationspartnern der entfernten Komponente installiert oder werden sogar für den Aufbau von unerwünschten Kommunikationsbeziehungen vorsätzlich missbraucht. Dadurch kann das sogenannte "Least Functionality Prinzip" gemäß der IEC-Norm 62443 verletzt werden.

In der WO 2017/144056 A1 ist ein Verfahren zur Verbesserung der Informationssicherheit von Fahrzeug-zu-X Kommunikation offenbart, wobei die Fahrzeug-zu-X Kommunikation mittels zumindest eines Zertifikats absicherbar ist.

Die EP 3 624 413 A1 offenbart ein grundlegendes Verfahren zur Beantragung eines Zertifikats bei einer Registrierungsstelle einer technischen Anlage durch eine Komponente der technischen Anlage. Eine Revokation von Zertifikaten wird in diesem Kontext nicht behandelt.

Der Erfindung liegt die Aufgabe zugrunde, ein Leitsystem für eine technische Anlage anzugeben, dessen Integrität effizienter und ressourcenschonender überprüft werden kann.

Diese Aufgabe wird gelöst durch ein Leitsystem für eine technische Anlage, insbesondere eine Fertigungs- oder Prozessanlage, das wenigstens einen Engineering Station Server, wenigstens eine Zertifizierungsinstanz, und wenigstens eine erste zu automatisierende Anlagenkomponente und eine zweite zu automatisierende Anlagenkomponente umfasst, wobei auf dem Engineering Station Server eine Automatisierungskonfiguration bezüglich der zu automatisierenden Anlagenkomponenten hinterlegt ist, und wobei die Zertifizierungsinstanz für ein Ausstellen und Widerrufen von Zertifikaten für wenigstens die erste Anlagenkomponente und die zweite Anlagenkomponente zuständig ist, mit den Merkmalen des Anspruchs 1. Zudem wird die Aufgabe gelöst durch eine Automatisierungskomponente gemäß Anspruch 6. Außerdem wird die Aufgabe gelöst durch eine Verwendung eines Leitsystems zur Revokation von Zertifikaten, die Anlagenkomponenten einer technischen Anlage zugewiesen sind, gemäß Anspruch 8. Vorteilhafte Weiterbildungen ergeben sich aus den abhängigen Ansprüchen.

Bei einem Leitsystem der eingangs beschriebenen Art wird die Aufgabe erfindungsgemäß dadurch gelöst, dass wenigstens auf der ersten Anlagenkomponente und der zweiten Anlagenkomponente ein Revokationsdienst implementiert ist, und dass
der Engineering Station Server dazu ausgebildet ist, bei einem Wegfall der ersten Anlagenkomponente unmittelbar die Automatisierungskonfiguration zu aktualisieren und unmittelbar nach dieser Aktualisierung eine diesbezügliche Information an wenigstens den Revokationsdienst der ersten Anlagenkomponente oder den Revokationsdienst der zweiten Anlagenkomponente zu übermitteln, und dass
der Revokationsdienst der ersten Anlagenkomponenten und der Revokationsdienst der zweiten Anlagenkomponente dazu ausgebildet sind, anhand der aktualisierten Automatisierungskonfiguration eine Notwendigkeit einer Revokation eines oder mehrerer Zertifikate zu ermitteln und daraufhin eine entsprechende Revokationsnachricht an wenigstens den Revokationsdienst der jeweils anderen Anlagenkomponente und an die Zertifizierungsinstanz zu übermitteln, um eine Revokation der von der ersten Anlagenkomponente und/oder der zweiten Anlagenkomponente verwendeten Zertifikate durch die Zertifizierungsinstanz zu initiieren, und um wenigstens die jeweils andere Anlagenkomponente über die vorzunehmende Revokation der Zertifikate zu benachrichtigen.

Die Revokationsnachricht an die Zertifizierungsinstanz umfasst dabei in zweckdienlicher Weise einen Revokationsantrag für das oder die Zertifikate, während die Revokationsnachricht an wenigstens den Revokationsdienst der zweiten Anlagenkomponente eine Information darüber umfasst, welche Zertifikate revoziert / widerrufen werden sollen.

Unter einem Leitsystem wird im vorliegenden Kontext ein computergestütztes technisches System verstanden, das Funktionalitäten zum Darstellen, Bedienen und Leiten eines technischen Systems wie einer Fertigungs- oder Produktionsanlage umfasst. Das Leitsystem umfasst im vorliegenden Fall wenigstens eine erste Anlagenkomponente und eine zweite Anlagenkomponente. Zudem kann das Leitsystem sogenannte prozess- oder fertigungsnahe Komponenten umfassen, die zur Ansteuerung von Aktoren bzw. Sensoren dienen.

Bei der technischen Anlage kann es sich um eine Anlage aus der Prozessindustrie wie beispielsweise eine chemische, pharmazeutische, petrochemische oder eine Anlage aus der Nahrungs- und Genussmittelindustrie handeln. Hiermit umfasst sind auch jegliche Anlagen aus der Produktionsindustrie, Werke, in denen z.B. Autos oder Güter aller Art produziert werden. Technische Anlagen, die zur Durchführung des erfindungsgemäßen Verfahrens geeignet sind, können auch aus dem Bereich der Energieerzeugung kommen. Windräder, Solaranlagen oder Kraftwerke zur Energieerzeugung sind ebenso von dem Begriff der technischen Anlage umfasst.

Bei einer Anlagenkomponente kann es sich um einzelne Messumformer für Sensoren oder Steuergeräte für Aktoren der technischen Anlage handeln. Eine Anlagenkomponente kann aber auch ein Zusammenschluss mehrerer solcher Messumformer oder Steuergeräte sein, beispielsweise ein Motor, ein Reaktor, eine Pumpe oder ein Ventilsystem. Übergeordnete Geräte wie ein Automatisierungsgerät, ein Operator Station Server oder eine dezentrale Periphere sind ebenfalls unter dem Begriff "Anlagenkomponente" zu fassen. Ein Automatisierungsgerät ist dabei ein technisches Gerät, das zur Realisierung einer Automatisierung benutzt wird. Es kann sich dabei beispielsweise um eine speicherprogrammierbare Steuerung handeln, die eine übergeordnete Steuerungsfunktion für untergeordnete Steuerungen darstellt. Unter einem "Operator Station Server" wird vorliegend ein Server verstanden, der zentral Daten eines Bedien- und Beobachtungssystems sowie in der Regel Alarm- und Messwertarchive eines Leitsystems einer technischen Anlage erfasst und Benutzern zur Verfügung stellt. Der Operator Station Server stellt in der Regel eine Kommunikationsverbindung zu Automatisierungssystemen (wie einem Automatisierungsgerät) der technischen Anlage her und gibt Daten der technischen Anlage an sogenannte Clients weiter, die zur Bedienung und Beobachtung eines Betriebs der einzelnen Funktionselemente der technischen Anlage dienen.

Der Operator Station Server kann über Client-Funktionen verfügen, um auf die Daten (Archive, Meldungen, Tags, Variablen) anderer Operator Station Server zuzugreifen. Dadurch sind Bilder eines Betriebs der technischen Anlage auf dem Operator Station Server mit Variablen anderer Operator Station Server (Server-Server-Kommunikation) kombinierbar. Bei dem Operator Station Server kann es sich, ohne sich darauf zu beschränken, um einen SIMATIC PCS 7 Industrial Workstation Server der Firma SIEMENS handeln.

Unter einem "Engineering Station Server" wird vorliegend ein Server verstanden, der dazu ausgebildet ist, verschiedene Hardware- und Software-Projekte für ein Leitsystem einer technischen Anlage zu erstellen, verwalten, archivieren und dokumentieren. Mithilfe von speziellen Software-Entwurfswerkzeugen (Engineering Toolset) sowie vorgefertigten Bausteinen und Plänen kann mittels des Engineering Station Servers ein Zusammenspiel von leittechnischen Geräten und Einrichtungen der technischen Anlage geplant und verwaltet werden. Ein Beispiel für einen solchen Engineering Station Server ist ein SIMATIC Manager Server der Firma SIEMENS.

Die sogenannte ausstellende Zertifizierungsinstanz (CA) kann auch als eine sogenannte "Issuing CA (Certification Authority)" bezeichnet werden und stellt, basierend auf eingehenden Zertifikatsanträgen, Zertifikate für diverse Antragsteller aus, die sie mit ihrem eigenen Zertifikat signiert. Die Vertrauenswürdigkeit der Zertifizierungsinstanz wird dadurch sichergestellt, dass ihr eigenes Zertifikat durch das Zertifikat einer vertrauenswürdigen Wurzelzertifizierungsinstanz (auch als "Root CA" bezeichnet), die sich in einer abgesicherten Umgebung befindet, signiert ist. Die Zertifizierungsinstanz kann nicht nur Zertifikate ausstellen, sondern diese auch widerrufen. Damit die Zertifizierungsinstanz die Revokation bzw. Widerrufung eines Zertifikats vornimmt, ist in der Regel ein entsprechender Revokationsantrag einer Anlagenkomponente erforderlich, deren Zertifikat revoziert werden soll.

Unter einem Zertifikat wird ein digitaler Datensatz nach dem Standard X.509 (RFC 5280) verstanden, der bestimmte Eigenschaften (in diesem Fall von Maschinen, Geräten, Applikationen und dergleichen) bestätigt. Eine Authentizität und Integrität des Zertifikats können in der Regel mittels kryptografischer Verfahren verifiziert werden. Bei einem Zertifikat kann es sich um ein operatives Zertifikat, das für eine Kommunikation zwischen verschiedenen Anlagenkomponenten der technischen Anlage verwendet wird, oder um ein komponenteneigenes Zertifikat, welches auch als Herstellerzertifikat bezeichnet wird, handeln.

In der Automatisierungskonfiguration können beispielsweise einzelne Betriebsparameter für die Anlagenkomponenten oder ein Zusammenwirken der Anlagenkomponenten angegeben sein. Es können im Rahmen von sogenannten Engineering-Projekten Lösungen für die Automatisierung der technischen Anlage in der Automatisierungskonfiguration hinterlegt sein. Die Automatisierungskonfiguration wird in der Regel in ein von den Anlagenkomponenten verstehbares (Daten-)Format gebracht und auf die Anlagenkomponenten übertragen, damit diese ihren Betrieb entsprechend einrichten können. Eine solche Automatisierungskonfiguration kann beispielsweise mittels der grafischen Programmiersprache CFC (Continuous Function Chart) beschrieben sein.

Durch die unmittelbare, d.h. schnellstmögliche Übertragung der geänderten Automatisierungskonfiguration an wenigstens den Revokationsdienst der ersten Anlagenkomponente oder an den Revokationsdienst der zweiten Anlagenkomponente und die anschließende unmittelbare Weiterverteilung einer aus der Änderung der Automatisierungskonfiguration folgenden bzw. abgeleiteten Revokationsnachricht an die weiteren Revokationsdienste des Leitsystems (der sogenannte "Revocation Broadcast") und an die Zertifizierungsinstanz wird ermöglicht, dass die in der technischen Anlage Zertifizierungsinstanz (en) sowie die übrigen Anlagenkomponenten über einen anzustoßenden Revokationsvorgang sofort informiert werden.

Hierdurch kann auf der einen Seite effizient verhindert werden, dass eine Anlagenkomponente, deren Zertifikate revoziert wurden bzw. zur Revokation vorgesehen sind, unerlaubterweise erneut ein Zertifikat für eine Kommunikation innerhalb der technischen Anlage erlangen kann. Auf der anderen Seite verfügt hiermit jede Anlagenkomponente über eine Information darüber, ob einem potenziellen Kommunikationspartner überhaupt Zertifikate für die Kommunikation innerhalb der technischen Anlage zustehen. Auch wenn der potenzielle Kommunikationspartner angibt, ein gültiges Zertifikat zu besitzen, weiß die betroffene Anlagenkomponente aufgrund des "Revocation Broadcasts" und der anschließenden Aktualisierung der Konfiguration des Revokationsdienstes, dass dem potenziellen Kommunikationspartner keine Zertifikate zustehen, weshalb sie die Kommunikation in diesem Fall verweigern würde. Um diese Funktionalität sinnvoll nutzen zu können, können die erste Anlagenkomponente und die zweite Anlagenkomponente die Informationen bezüglich der revozierten Zertifikate jeweils in einer auf der jeweiligen Anlagenkomponente implementierten Revokationsdatenbank abrufbar hinterlegen. Man spricht in diesem Zusammenhang von einer sogenannten "Blacklist", die die Anlagenkomponenten führen.

Der Revokationsdienst kann bei jeder ausgesandten Revokationsnachricht den optimalen Weg zwischen ggf. mehreren verfügbaren Wegen auswählen. Neben dem vollautomatisierten Weg kann er dabei alternativ oder zusätzlich einen zuständigen Administrator/ Operator der technischen Anlage mittels einer Revokationsnachricht informieren. Darüber hinaus kann beispielsweise eine (signierte) E-Mail als Revokationsnachricht an den Dienstleister übermittelt werden, der die zuständige Zertifizierungsinstanz (beispielsweise in einem Trust Center remote oder in der technischen Anlage vor Ort) betreibt. Die Ermittlung des optimalen Weges zur Initiierung der Revokation kann dabei unter Verwendung von Methoden der künstlichen Intelligenz (KI) weiter verbessert werden.

Um die Verbreitung der mit der geänderten Automatisierungskonfiguration verbundenen Revokationsnachricht zu verbessern, leiten im Rahmen einer Weiterbildung der Erfindung die erste Anlagenkomponente und/oder die zweite Anlagenkomponente und vorzugsweise alle möglichen weiteren Anlagenkomponenten mit implementierten Revokationsdiensten nach Erhalt der Revokationsnachricht diese unmittelbar an weitere, insbesondere alle übrigen Anlagenkomponenten weiter.

Besonders bevorzugt ist der Engineering Station Server dazu ausgebildet, an den auf der ersten Anlagenkomponente implementierten Revokationsdienst und an den auf der zweiten Anlagenkomponente implementierten Revokationsdienst eine Information dahingehend zu übermitteln, ob für eine Kommunikation der ersten Anlagenkomponente mit wenigstens der zweiten Anlagenkomponente ausgestellte Zertifikate vorliegen, und ob diese revoziert werden müssen, wobei der Revokationsdienst der ersten Anlagenkomponente und der Revokationsdienst der zweiten Anlagenkomponente dazu ausgebildet sind, auf den Erhalt der Information hin eine Revokation dieser Zertifikate zu initiieren.

Diese Weiterbildung der Erfindung ist beispielsweise dann von Vorteil, wenn die erste Anlagenkomponente ersatzlos entfernt wird und nicht durch ein andere (identische) Anlagenkomponente ersetzt wird. Dann müssen auch die Zertifikate der Kommunikationspartner, die zur Kommunikation mit der entfernten ersten Automatisierungskomponente verwendet wurden, sofort revoziert werden.

Im Rahmen des zuvor Erläuterten ist der Engineering Station Server bevorzugt dazu ausgebildet, eine Änderungsanfrage eines Anwenders des Leitsystems bezüglich der Automatisierungskonfiguration dahingehend zu analysieren, ob eine Revokation derjenigen Zertifikate notwendig ist, die für eine Kommunikation der ersten Anlagenkomponente mit wenigstens der zweiten Anlagenkomponente ausgestellt vorliegen. Aus der Analyse der Änderungsanfrage kann der Engineering Station Server so erkennen, ob auch Zertifikate der Anlagenkomponenten revoziert werden müssen, die die Kommunikation der beiden Anlagenkomponenten betreffen.

Diese Weiterbildung ist dabei nicht auf die Kommunikation zwischen zwei Anlagenkomponenten beschränkt, sondern kann gleichfalls eine Mehrzahl von Anlagenkomponenten betreffen (abhängig von den vorliegenden Kommunikationsverbindungen).

Für eine nähere Erläuterung hierzu sei auf die Beschreibung des Ausführungsbeispiels verwiesen.

Durch das zuvor erläuterte Leitsystem kann zur Einhaltung des sog. Least Functionality Prinzips (CR 7.7, SR 7.7 nach IEC 62443-3-3) beigetragen werden, indem verhindert werden kann, dass viele eigene, nicht mehr benutzte Zertifikate und/oder ebenfalls nicht mehr benutzte Zertifikate der Kommunikationspartner über einen langen Zeitraum - auch wenn sie nicht mehr benötigt werden - in der technischen Anlage abgelegt bleiben. Dabei sind diese noch nicht revoziert und gelten somit als gültig, was u.a. deren Missbrauch möglich macht. Außerdem können durch das Leitsystem der für die manuelle Durchführung der Revokation und die damit verbundenen Entscheidungsprozesse erforderliche Zeitaufwand und die aktuell sehr hohe Fehleranfälligkeit im Zusammenhang mit der Revokation stark reduziert werden.

Die zuvor formulierte Aufgabe wird zudem gelöst durch eine Anlagenkomponente eines Leitsystems einer technischen Anlage, die dazu ausgebildet ist, von einem Engineering Station Server eine Information über eine aktualisierte Automatisierungskonfiguration für die technische Anlage zu erhalten, und anhand der aktualisierten Automatisierungskonfiguration eine Notwendigkeit einer Revokation eines oder mehrerer Zertifikate zu ermitteln und daraufhin eine entsprechende Revokationsnachricht an wenigstens einen Revokationsdienst einer anderen Anlagenkomponente und an eine Zertifizierungsinstanz eines Leitsystems der technischen Anlage zu übermitteln, um eine Revokation der von Anlagenkomponente und/oder anderen Anlagenkomponente verwendeten Zertifikate durch die Zertifizierungsinstanz zu initiieren, und um wenigstens eine andere Anlagenkomponente über die vorzunehmende Revokation der Zertifikate zu benachrichtigen.

Bevorzugt ist diese Anlagenkomponente dazu ausgebildet, eine Revokationsnachricht einer anderen Anlagenkomponente zu erhalten und daraufhin selbst eine Revokationsnachricht an wenigstens einen Revokationsdienst einer anderen Anlagenkomponente und an die Zertifizierungsinstanz des Leitsystems der technischen Anlage zu übermitteln, um eine Revokation der von Anlagenkomponente und/oder anderen Anlagenkomponente verwendeten Zertifikate durch die Zertifizierungsinstanz zu initiieren, und um wenigstens eine andere Anlagenkomponente über die vorzunehmende Revokation der Zertifikate zu benachrichtigen.

Die zuvor formulierte Aufgabe wird zudem gelöst durch die Verwendung eines Leitsystems, wie es zuvor beschrieben wurde, zur Revokation von Zertifikaten, die Anlagenkomponenten einer technischen Anlage zugewiesen sind.

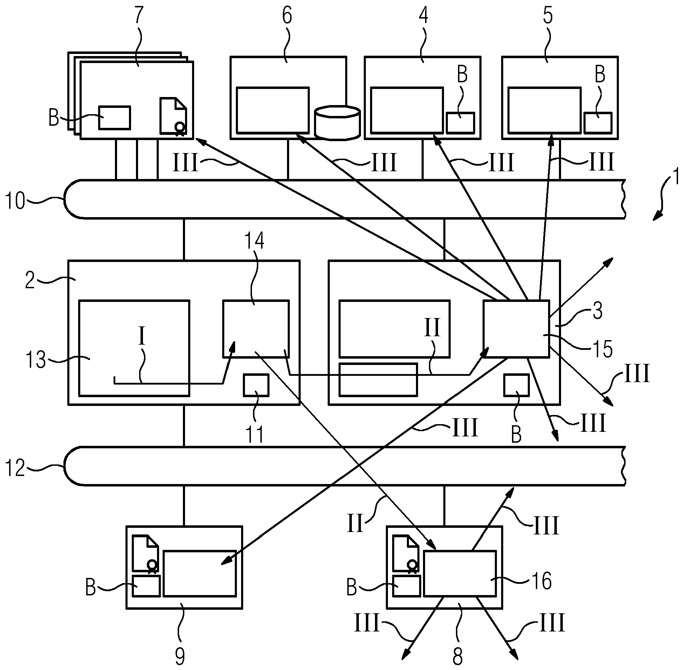

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung eines Ausführungsbeispiels, das im Zusammenhang mit der Zeichnung näher erläutert wird.

In der Figur ist ein Teil eines erfindungsgemäßen Leitsystems 1 einer als Prozessanlage, d.h. verfahrenstechnische Anlage, ausgebildeten technischen Anlage dargestellt. Das Leitsystem 1 umfasst einen Engineering Station Server 2, einen Operator Station Server 3, einen Engineering Station Client 4, einen Operator Station Client 5, eine Registrierungsinstanz 6, eine Zertifizierungsinstanz 7, eine erste Anlagenkomponente 8 und eine zweite Anlagenkomponente 9.

Der Operator Station Server 3, der Engineering Station Server 2, der Engineering Station Client 4, der Operator Station Client 5, die Registrierungsinstanz 6 und die Zertifizierungsinstanz 7 sind über einen Terminalbus 10 miteinander und optional mit nicht dargestellten weiteren Komponenten des Leitsystems 1 wie einem Prozessdatenarchiv verbunden.

Ein Benutzer bzw. Operator kann zum Zwecke des Bedienens und Beobachtens über den Operator Station Client 5 mittels des Terminalbus 10 auf den Operator Station Server 3 zugreifen. Ein Projekteur bzw. Bediener hat mittels des Engineering Station Clients 4 mittels des Terminalbus 10 im Kontext eines Engineerings / Projektierens / Konfigurierens Zugriff auf den Engineering Station Server 2. Der Terminalbus 10 kann, ohne sich darauf zu beschränken, beispielsweise als Industrial Ethernet ausgebildet sein.

Der Engineering Station Server 2 weist eine Schnittstelle 11 auf, die mit einem Anlagenbus 12 verbunden ist. Über diese Schnittstelle 11 kann der Engineering Station Server 2 mit der ersten Anlagenkomponente 8 und der zweiten Anlagenkomponente 9 sowie mit optional vorhandenen weiteren Komponenten der Prozessanlage kommunizieren. Der Anlagenbus 12 kann, ohne sich darauf zu beschränken, beispielsweise als Industrial Ethernet ausgebildet sein. Die beiden Anlagenkomponenten 8, 9 können mit einer beliebigen Anzahl an Subsystemen (nicht dargestellt) verbunden sein.

In dem Engineering Station Server 2 ist eine Automatisierungskonfiguration 13 bezüglich der zu automatisierenden Anlagenkomponenten 8, 9 hinterlegt. Dabei kann es sich beispielsweise um einen CFC-Plan handeln. Im Rahmen von sogenannten Engineering-Projekten ist hierbei festgelegt, wie die einzelnen Anlagenkomponente 8, 9 selbst und miteinander agieren sowie kommunizieren sollen. Es wird im Folgenden der Fall betrachtet, dass die erste Anlagenkomponente 8 aus der Prozessanlage und damit auch aus dem Leitsystem 1 entfernt werden soll. Die erste Anlagenkomponente wird zunächst von einem hierzu berechtigten Anwender / Projekteur der Prozessanlage in der Automatisierungskonfiguration 13 softwareseitig entfernt. Beim Entfernen der ersten Anlagenkomponente 8 aus der Automatisierungskonfiguration 13 kann zwischen folgenden Szenarien unterschieden werden:
a) Komponententausch (replace): Die zu entfernenden erste Anlagenkomponente wird durch eine andere Anlagenkomponente ersetzt, welche deren Rolle und somit die Kommunikationsverbindungen zu ihren Kommunikationspartnern übernimmt. Die Kommunikationspartner können ihre operativen Zertifikate, die sie für die Kommunikation mit der zu entfernenden ersten Anlagenkomponente 8 benutzt haben, weiterhin - für die Kommunikation mit dem Nachfolger - nutzen. Somit müssen die operativen Zertifikate der Kommunikationspartner nicht revoziert werden. Für eine Revokation vorgesehen sind nur die von der ersten Anlagenkomponente 8 verwendeten operativen Zertifikate.
b) Ersatzloses Entfernen (remove): Die zu entfernende erste Anlagenkomponente 8 wird ersatzlos entfernt, d.h. durch keine andere Anlagenkomponente ersetzt. Die erste Anlagenkomponente 8 wird jedoch nicht (endgültig) entsorgt und behält somit ihr komponenteneigenes Zertifikat (Herstellerzertifikat / Gerätezertifikat, engl. manufacturer device certificate). Die operativen Zertifikate der Kommunikationspartner, die mit der zu entfernenden ersten Anlagenkomponente 8 kommuniziert haben, müssen revoziert werden, da die Kommunikationsbeziehung entfällt.
c) Komponententausch, wobei die zu ersetzende erste Anlagenkomponente 8 defekt und nicht mehr reparierbar ist (replace with disposal): Wie das Szenario a), wobei alle Zertifikate der zu entfernenden ersten Anlagenkomponente, d.h. auch das komponenteneigene Zertifikat (Gerätezertifikat, device certificate) der ersten Anlagenkomponente 8, revoziert werden müssen. Analog zu a) können die Kommunikationspartner der zu entfernenden ersten Anlagenkomponente 8 ihre operativen Zertifikate, die sie für die Kommunikation mit der zu entfernenden ersten Anlagenkomponente 8 benutzt haben, weiterhin - für die Kommunikation mit dem Nachfolger der ersten Anlagenkomponente 8 - nutzen. Somit müssen diese nicht revoziert werden.
d) Entsorgung ohne Ersatz (disposal): Analog zu b) mit dem Unterschied, dass alle Zertifikate der zu entfernenden ersten Anlagenkomponente 8 einschließlich deren komponenteneigenen Zertifikats revoziert werden müssen.

Im folgenden Beispiel soll die erste Anlagenkomponente 8 vollständig entfernt werden (Szenario d). Der Projekteur entfernt hierzu zunächst, wie bereits erwähnt, die erste Anlagenkomponente 8 aus der Automatisierungskonfiguration 13. Die aktualisierte Automatisierungskonfiguration 13 wird mittels eines Transformationsbausteins 14 des Engineering Station Servers 2 in ein Format transformiert (übersetzt), welches von der ersten Anlagenkomponente 8 verstanden werden kann (Schritt I).

Der Engineering Station Server 2 übermittelt die aktualisierte Automatisierungskonfiguration 13 unmittelbar an einen auf dem Operator Station Server 3 implementierten Revokationsdienst 15 und an einen auf der ersten Automatisierungskomponente 8 implementierten Revokationsdienst 16 (Schritt II). Es ist dabei von Vorteil, dass die aktualisierte Automatisierungskonfiguration 13 (in übersetzter Form) direkt an die zu entfernende Anlagenkomponente 8 übertragen wird, da so eine Initiierung einer Revokation von Zertifikaten der ersten Anlagenkomponente 8 schneller erfolgen kann. Die Übertragung der Automatisierungskonfiguration kann aber alternativ auch an andere Anlagenkomponenten (wie in diesem Fall an den Operator Station Server 3) erfolgen, die mittels dem im Folgenden ausgeführten "Revocation Broadcast" die Revokation der Zertifikate der ersten Anlagenkomponente 8 initiieren. Genauso ist es aber auch möglich, dass die aktualisierte Automatisierungskonfiguration 13 an eine Mehrzahl von Anlagenkomponenten, im Grenzfall sogar an alle erreichbaren Anlagenkomponenten des Leitsystems 1 der technischen Anlage übermittelt wird, was zwar auf der einen Seite den Kommunikationsaufwand erhöht, aber zu einer schnelleren Revokation der betreffenden Zertifikate führen kann (insbesondere in dem Fall, dass Anlagenkomponenten, deren Zertifikate betroffen sind, nicht erreichbar sind).

Im vorliegenden Beispiel entnehmen der Revokationsdienst 15 des Operator Station Server 3 und der Revokationsdienst 16 der ersten Anlagenkomponente 8 aus der empfangenen Automatisierungskonfiguration 13, welche Anlagenkomponente auf welche Art und Weise entfernt werden muss (vgl. Szenarien a bis d). Zudem können der empfangenen Automatisierungskonfiguration 13 die Kommunikationspartner der zu entfernenden ersten Anlagenkomponente 8 und ihre, für die Kommunikation mit der ersten Anlagenkomponente 8 eingesetzten operativen Zertifikate entnommen werden. Aus den Inhalten der Zertifikate (genauer gesagt aus dem Eintrag "Issuer") kann zudem ermittelt werden, welche Zertifizierungsinstanz 7 das zu revozierende Zertifikat bzw. die zu revozierenden Zertifikate ausgestellt hat.

Der Revokationsdienst 15, 16 erzeugt daraufhin eine Revokationsnachricht, die einen Revokationsantrag an die Zertifizierungsinstanz 7 bzw. an die ggf. dazwischengeschaltete Registrierungsinstanz 6 umfasst. Diese Revokationsnachricht wird von den Revokationsdiensten 15, 16 an weitere Anlagenkomponenten wie die erste Anlagenkomponente 8 oder die zweite Anlagenkomponente 9, und an die Zertifizierungsinstanz 7 bzw. die dazwischengeschaltete Registrierungsinstanz 6 übermittelt (Schritt III).

Damit der Revokationsdienst 15, 16 die korrekte Zertifizierungsinstanz 7 bzw. die korrekte Registrierungsinstanz 6 kennt, werden alle in der technischen Anlage verfügbaren Zertifizierungsinstanzen 7 und alle ggf. externen Zertifizierungsinstanzen, die Zertifikate für bestimmte Anlagenkomponenten ausgestellt haben, dem Revokationsdienst 15, 16 durch eine entsprechende Konfiguration bekannt gemacht. Dies erfolgt beispielsweise dann, wenn eine neue Zertifizierungsinstanz 7 zur technischen Anlage hinzugefügt wird.

Abhängig von dem Typ der Zertifizierungsinstanz 7 wählt der Revokationsdienst 15, 16 den "richtigen", für die Zertifizierungsinstanz 7 spezifischen Weg, um einen Revokationsnachricht mit einem darin enthaltenen Revokationsantrag an diese Zertifizierungsinstanz 7 zu übermitteln. Bei einer online verfügbaren, CMP-fähigen Zertifizierungsinstanz 7 (z.B. EJBCA) wird beispielsweise ein Revokationsantrag in Form einer sog. Revocation Request (rr)-Message an die Zertifizierungsinstanz 7 übermittelt. Bei einer Zertifizierungsinstanz 7 von Microsoft wird ein automatisierter, administrativer Vorgang zur Revokation angestoßen.

Stellt der Revokationsdienst 15, 16 fest, dass die beteiligten Instanzen (in diesem Fall die Zertifizierungsinstanz 7 und die Registrierungsinstanz 6) netzwerktechnisch oder aufgrund von Kommunikationsproblemen nicht sofort erreichbar sind, so wird eine Meldung mit der Aufforderung, bestimmte Zertifikate direkt an der Zertifizierungsinstanz 7 zu revozieren, z.B. an einen Operator der Prozessanlage mit den entsprechenden Berechtigungen - beispielsweise per E-Mail/SMS - übermittelt. Eine ähnliche Vorgehensweise kommt bei einer externen Zertifizierungsinstanz 7 zum Einsatz: Dabei wird beispielsweise eine zuständige Person informiert, die z.B. bei dem entsprechenden Dienstleister oder dem Hersteller die Revokation der Zertifikate beantragt.

Der "Revocation Broadcast" wird von allen erreichten Revokationsdiensten 15, 16 ebenfalls als Broadcast weitergeleitet (nicht grafisch dargestellt - vergleichbar mit Schritt III), um alle zur Laufzeit der Prozessanlage aktiven Anlagenkomponenten 8, 9 - ggf. auch projektübergreifend - erreichen zu können. Ist zur Laufzeit eine Analgenkomponente 8, 9 nicht aktiv - z.B. ein heruntergefahrener Operator Station Server 3 - so geht zunächst der Broadcast an ihm vorbei, bis er hochgefahren wird. Nach dem Hochfahren wird durch den in der hochgefahrenen Automatisierungskomponente 8, 9 integrierten Revokationsdienst 15, 16 ein Abgleich mit den Revokationsdiensten 15, 16 anderer Anlagenkomponenten 8, 9 vorgenommen, die während des "Revocation Broadcasts" erreicht wurden.

Als Reaktion auf einen "Revocation Broadcast" werden die mit diesem assoziierten revozierten bzw. zu revozierenden Zertifikate in eine sogenannte Blacklist B auf der jeweiligen Anlagenkomponente 8, 9 eingetragen. Die Blacklist B kann dabei auf alle Anlagenkomponenten 8, 9 verteilt und von diesen gepflegt werden.

Bei jedem Verbindungsaufbau, der im Anlagenkontext initiiert wird, und der in der Regel mit einer Art Handshake beginnt, bei welchem Zertifikate ausgetauscht werden, kann jede Anlagenkomponente 8, 9, ob das Zertifikat des jeweiligen Kommunikationspartners in der Blacklist B enthalten ist, und kann die Kommunikation ablehnen, falls dies der Fall ist.

Von dem beschriebenen "Revocation Broadcast" kann direkt eine online verfügbare Zertifizierungsinstanz 7 profitieren, da diese unmittelbar über das Entfernen der ersten Anlagenkomponente 8 und die damit verbundene Revokation der Zertifikate in einem Automatisierungsprojekt informiert wird. Dies dient wiederum als Trigger zum erneuten Ausstellen der von der Zertifizierungsinstanz 7 geführten Sperrliste (für Zertifikate). Da die Sperrliste nach gängigen Konzepten auf die Verteilungspunkte (die sich ggf. auf den Anlagenkomponenten 8, 9 selbst befinden) in der Prozessanlage verteilt wird, wird erreicht, dass alle Anlagenkomponenten 8, 9 stets Zugriff auf den aktuellen Revokationsstatus ihrer eigenen Zertifikate sowie der Zertifikate ihrer Kommunikationspartner haben.

Für eine Zertifizierungsinstanz 7, die nicht online verfügbar ist, ist es erforderlich entsprechende Workflows zu realisieren, damit die Sperrlisten der Zertifizierungsinstanz 7 möglichst kurzfristig nach der Revokation der Zertifikate erneut ausgestellt, veröffentlicht und in der Prozessanlage verteilt werden. Falls in einer heterogenen Anlage jedoch nicht garantiert werden kann, dass die Sperrliste möglichst umgehend nach der Revokation eines Zertifikats erneut ausgestellt wird, kann sich die zuvor beschriebene Blacklist B als besonders vorteilhaft herausstellen.

Auch die Registrierungsinstanz 6 (engl. registration authority), bei der die Anlagenkomponenten 8, 9 ihre Zertifikate bzw. deren Erneuerung beantragen und die in Rücksprache mit einem sog. Inventory (in welchem alle geprüften und zur Zertifikatsbeantragung berechtigten Komponenten hinterlegt sind) entscheidet, ob eine Komponente ein (erneuertes) Zertifikat bekommen darf, profitiert vom "Revocation Broadcast". Werden beispielsweise alle Zertifikate einer Anlagenkomponente 8, 9 revoziert, kann die Registrierungsinstanz 6 die Anlagenkomponente 8, 9 als eine entsorgte Komponente kennzeichnen oder vollständig entfernen. Dadurch wird ausgeschlossen, dass eine entsorgte Anlagenkomponente 8, 9 in dieser Prozessanlage Zertifikate bekommt, die versehentlich oder vorsätzlich zum Einsatz kommen könnten.

## Patentansprüche

1. Leitsystem (1) für eine technische Anlage, insbesondere eine Fertigungs- oder Prozessanlage, das wenigstens einen Engineering Station Server (2), wenigstens eine Zertifizierungsinstanz (7), und wenigstens eine erste Anlagenkomponente (8) und eine zweite Anlagenkomponente (9) umfasst,
wobei auf dem Engineering Station Server (2) eine Automatisierungskonfiguration (13) der Anlagenkomponenten (8, 9) hinterlegt ist,
und wobei die Zertifizierungsinstanz (7) für ein Ausstellen und Revozieren von Zertifikaten für wenigstens die erste Anlagenkomponente (8) und die zweite Anlagenkomponente (9) zuständig ist,
**dadurch gekennzeichnet, dass**
wenigstens auf der ersten Anlagenkomponente (8) und der zweiten Anlagenkomponente (9) ein Revokationsdienst (15, 16) implementiert ist, und dass
der Engineering Station Server (2) dazu ausgebildet ist, bei einem Wegfall der ersten Anlagenkomponente (8) unmittelbar die Automatisierungskonfiguration (13) zu aktualisieren und unmittelbar nach dieser Aktualisierung eine diesbezügliche Information an wenigstens den Revokationsdienst (15, 16) der ersten Anlagenkomponente (8) oder den Revokationsdienst (15, 16) der zweiten Anlagenkomponente (9) zu übermitteln, und dass
der Revokationsdienst (15, 16) der ersten Anlagenkomponente (8) und der Revokationsdienst (15, 16) der zweiten Anlagenkomponente (9) dazu ausgebildet sind, anhand der aktualisierten Automatisierungskonfiguration (13) eine Notwendigkeit einer Revokation eines oder mehrerer Zertifikate zu ermitteln und daraufhin eine entsprechende Revokationsnachricht an wenigstens den Revokationsdienst (15, 16) der jeweils anderen Anlagenkomponente (8, 9) und an die Zertifizierungsinstanz (7) zu übermitteln, um eine Revokation der von der ersten Anlagenkomponente (8) und/oder der zweiten Anlagenkomponente (9) verwendeten Zertifikate durch die Zertifizierungsinstanz (7) zu initiieren, und um wenigstens die jeweils andere Anlagenkomponente (8, 9) über die vorzunehmende Revokation der Zertifikate zu benachrichtigen.

2. Leitsystem (1) nach Anspruch 1, bei dem die erste Anlagenkomponente (8) und die zweite Anlagenkomponente (9) die Informationen bezüglich der zu revozierenden Zertifikate jeweils in einer auf der jeweiligen Anlagenkomponente (8, 9) implementierten Revokationsdatenbank (B) abrufbar hinterlegen.

3. Leitsystem (1) nach Anspruch 1 oder 2, bei dem die erste Anlagenkomponente (8) und/oder die zweite Anlagenkomponente (9) und vorzugsweise alle möglichen weiteren Anlagenkomponenten mit implementierten Revokationsdiensten (15, 16) nach Erhalt der Revokationsnachricht diese unmittelbar an weitere, insbesondere alle übrigen Anlagenkomponenten (8, 9) weiterleiten.

4. Leitsystem (1) nach einem der vorangegangenen Ansprüche, bei dem der Engineering Station Server (2) dazu ausgebildet ist, an den auf der ersten Anlagenkomponente (8) implementierten Revokationsdienst (15, 16) und an den auf der zweiten Anlagenkomponente (9) implementierten Revokationsdienst (15, 16) eine Information dahingehend zu übermitteln, ob für eine Kommunikation der ersten Anlagenkomponente (8) mit wenigstens der zweiten Anlagenkomponente (9) ausgestellte Zertifikate vorliegen, und ob diese revoziert werden müssen,
und wobei der Revokationsdienst (15, 16) der ersten Anlagenkomponente (8) und der Revokationsdienst (15, 16) der zweiten Anlagenkomponente (9) dazu ausgebildet sind, auf den Erhalt der Information hin eine Revokation dieser Zertifikate zu initiieren.

5. Leitsystem (1) nach Anspruch 4, bei dem der Engineering Station Server (2) dazu ausgebildet ist, eine Änderungsanfrage eines Anwenders des Leitsystems (1) bezüglich der Automatisierungskonfiguration (13) dahingehend zu analysieren, ob eine Revokation derjenigen Zertifikate notwendig ist, die für eine Kommunikation der ersten Anlagenkomponente (8) mit wenigstens der zweiten Anlagenkomponente (9) ausgestellt vorliegen.

6. Anlagenkomponente (8, 9) eines Leitsystems (1) einer technischen Anlage, die dazu ausgebildet ist, von einem Engineering Station Server (2) eine Information über eine aktualisierte Automatisierungskonfiguration (13) für die technische Anlage zu erhalten, anhand der aktualisierten Automatisierungskonfiguration (13) eine Notwendigkeit einer Revokation eines oder mehrerer Zertifikate zu ermitteln und daraufhin eine entsprechende Revokationsnachricht an wenigstens einen Revokationsdienst (15, 16) einer anderen Anlagenkomponente (8, 9) und an eine Zertifizierungsinstanz (7) des Leitsystems (1) der technischen Anlage zu übermitteln, um eine Revokation der von Anlagenkomponente (8) und/oder anderen Anlagenkomponente (9) verwendeten Zertifikate durch die Zertifizierungsinstanz (7) zu initiieren, und um wenigstens eine andere Anlagenkomponente (8, 9) über die vorzunehmende Revokation der Zertifikate zu benachrichtigen.

7. Anlagenkomponente (8, 9) nach Anspruch 6, die dazu ausgebildet ist, eine Revokationsnachricht einer anderen Anlagenkomponente (8, 9) zu erhalten und daraufhin selbst eine Revokationsnachricht an wenigstens einen Revokationsdienst (15, 16) einer anderen Anlagenkomponente (8, 9) und an die Zertifizierungsinstanz (7) des Leitsystems (1) der technischen Anlage zu übermitteln, um eine Revokation der von der Anlagenkomponente (8, 9) selbst und/oder der anderen Anlagenkomponenten verwendeten Zertifikate durch die Zertifizierungsinstanz (7) zu initiieren, und um wenigstens eine andere Anlagenkomponente über die vorzunehmende Revokation der Zertifikate zu benachrichtigen.

8. Verwendung eines Leitsystems (1) gemäß einem der Ansprüche 1 bis 5 zur Revokation von Zertifikaten, die Anlagenkomponenten (8, 9) einer technischen Anlage zugewiesen sind.
